(19)

**Europäisches Patentamt**
**European Patent Office**
**Office européen des brevets**

(11) **EP 4 628 453 A1**

(12) **EUROPEAN PATENT APPLICATION**
published in accordance with Art. 153(4) EPC

(43) Date of publication:
**08.10.2025 Bulletin 2025/41**

(21) Application number: **24907614.2**

(22) Date of filing: **17.04.2024**

(51) International Patent Classification (IPC):
$C01G\ 53/00^{(2025.01)}$    $H01M\ 4/525^{(2010.01)}$
$H01M\ 4/505^{(2010.01)}$    $H01M\ 4/02^{(2006.01)}$

(52) Cooperative Patent Classification (CPC):
C01G 53/00; H01M 4/02; H01M 4/505; H01M 4/525;
Y02E 60/10

(86) International application number:
**PCT/KR2024/005165**

(87) International publication number:
**WO 2025/135320 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.12.2023 KR 20230188622**

(71) Applicants:
• **Korea Zinc Co., Ltd.**
  **Seoul 03159 (KR)**
• **Kemco**
  **Seoul 03159 (KR)**

(72) Inventors:
• **LEE, Je Joong**
  **Seoul 06041 (KR)**
• **CHOI, Eun Ho**
  **Ulju-gun, Ulsan 45003 (KR)**
• **YOUN, Hong Min**
  **Ulsan 44763 (KR)**

(74) Representative: **Angerhausen, Christoph**
**Boehmert & Boehmert**
**Anwaltspartnerschaft mbB**
**Pettenkoferstrasse 22**
**80336 München (DE)**

(54) **MANUFACTURING METHOD FOR POSITIVE ELECTRODE ACTIVE MATERIAL PRECURSOR**

(57) A method for manufacturing a positive electrode active material precursor using a batch-type reactor according the the present disclosure, comprises the steps of: (S1) forming a nucleus of the precursor; (S2) growing the nucleus formed in the step S1; (S3) further growing the nucleus grown in the step S2; and (S4) further growing the nucleus grown in the step S3, wherein a stirring speed in the batch-type reactor is set to be: 200 rpm to 900 rpm during the step S2, 800 rpm or less during the step S3, and 700 rpm or less during the step S4, and a reaction solution is designed to overflow when the batch-type reactor is full thereof.

FIG. 2

**Description**

TECHNICAL FIELD

The present disclosure relates to a method for manufacturing a positive electrode active material precursor and, more specifically, to a method for manufacturing a positive electrode active material precursor using a batch-type reactor in an overflow manner.

BACKGROUND ART

Recently, with the expansion of the battery electric vehicle (BEV) market, there has been an increasing trend in the demand for secondary batteries. A battery typically includes a cathode, an anode, an electrolyte, and a separator, wherein the cathode and anode contain active materials capable of intercalation and deintercalation of lithium ions, for example.

Among the methods for manufacturing a positive electrode active material precursor, there are typically continuous methods using a continuous stirred-tank reactor (CSTR) and batch methods using a batch-type reactor. The continuous method includes co-precipitating raw materials and simultaneously discharging the particles formed as precursors, while the batch method involves introducing raw materials into the reactor volume for a set period, reacting them, and then discharging the precursor after the reaction ends.

In batch-type reactors, as the co-precipitation reaction time progresses, microparticles of the precursor are formed. To form precursor particles of a certain size, it is necessary for the microparticles formed through initial nucleation reactions to continue growing.

However, during the reaction for the growth of precursor microparticles, new nucleation reactions take place continuously so that small-sized precursor particles continue to be generated. Accordingly, at the end of the co-precipitation reaction time, the average particle size of the precursor particles becomes smaller and the particle size distribution becomes uneven. Ultimately, the tap density, specific surface area, and other physical properties of the desired positive electrode active material do not meet the target values, adversely affecting the charge/discharge capacity performance of the battery.

To address the problems, the affection of the precursor microparticles was controlled in conventional techniques where microparticles generated during a grinding process using an Air Classifier Mill (ACM), Air Jet Mill, etc., are captured through a separate back filter or removed by transferring the reaction solution containing the precursor from the reactor to a cyclone facility and centrifugally separating the microparticles. However, these conventional techniques increase costs and total process time due to additional processes/equipment, resulting in decreased production efficiency of the positive electrode active material and reduced production efficiency (Line of Balance, LOB).

In the precursor manufacturing process, an issue arises as the average particle size of the precursor particles increases, leading to surface cracking due to particle collisions. When cracks occur on the surface of the precursor particles, the press density decreases, which can lead to additional cracking during the electrode rolling process in the manufacture of the positive electrode active material. Consequently, side reactions with the electrolyte may occur, resulting in degraded battery performance.

DISCLOSURE

TECHNICAL PROBLEM

The present disclosure aims to solve the above problems and to provide a method for manufacturing a precursor wherein the formation of precursor microparticles is minimized during the growth phase of precursor nuclei to achieve a uniform particle size distribution, thereby preventing the occurrence of cracks on the surface of the precursor particles.

TECHNICAL SOLUTION

According to an aspect of the present disclosure, A method for manufacturing a positive electrode active material precursor using a batch-type reactor comprises the steps of: (S1) forming a nucleus of the precursor; (S2) growing the nucleus formed in the step S1; (S3) further growing the nucleus grown in the step S2; and (S4) further growing the nucleus grown in the step S3, wherein a stirring speed in the batch-type reactor is set to be: 200 rpm to 900 rpm during the step S2, 800 rpm or less during the step S3, and 700 rpm or less during the step S4, and a reaction solution is designed to overflow when the batch-type reactor is full thereof.

According to an aspect of the present disclosure, a co-precipitation reaction is carried out for 1 to 20 hours in the step S2.

According to an aspect of the present disclosure, the precursor has an average particle size $D_{50}$ of 6.5 $\mu$m to 13.0 $\mu$m after completion of the step S3.

According to an aspect of the present disclosure, a stirring speed inside the batch-type reactor during the step S1 is between 250 rpm and 1,000 rpm.

According to an aspect of the present disclosure, a transition metal compound solution is fed into the batch-type reactor at a flow rate of: 5 mL/min to 40 mL/min during the steps S2 and S3, and 2 mL/min to 30 mL/min during the step S4.

According to an aspect of the present disclosure, the transition metal compound solution comprises at least one element selected from the group consisting of nickel, cobalt, and manganese.

According to an aspect of the present disclosure, the transition metal compound solution comprises: nickel in an amount of 60 mol% to 96 mol%; cobalt in an amount of 0 mol% to 20 mol%; and manganese in an amount of 4 mol% to 40 mol%.

According to an aspect of the present disclosure, a nitrogen-containing compound solution is fed at a flow rate of: 1.0 mL/min to 10.0 mL/min during the steps S2 and S3, and 1.2 mL/min to 8.0 mL/min during the step S4.

According to an aspect of the present disclosure, a basic compound solution is fed at a flow rate of: 3 mL/min to 35 mL/min during the steps S2 and S3, and 2 mL/min to 30 mL/min during the step S4.

According to an aspect of the present disclosure, the reaction solution within the batch-type reactor has a pH of 10.5 to 13.5 in the step S1.

According to an aspect of the present disclosure, the reaction solution within the batch-type reactor has a pH of 10.5 to 13.0 in the steps S2, S3, and S4.

According to an aspect of the present disclosure, the reaction solution within the batch-type reactor has an ammonia concentration of 3,000 ppm to 7,000 ppm in the steps S2, S3, and S4.

According to an aspect of the present disclosure, the reaction solution within the batch-type reactor has a residual nickel concentration of 250 ppm or less in the steps S2, S3, and S4.

According to an aspect of the present disclosure, the positive electrode active material precursor generated through the steps S1 to S4 has a Span value of 0.38 as measured according to the following Equation 1:

[Equation 1]

$$\text{Span} = (\text{Particle size } D_{90} - \text{Particle size } D_{10}) / \text{Average particle size } D_{50}$$

According to an aspect of the present disclosure, the method further comprises a step of (S5) washing and drying the positive electrode active material precursor generated through the steps S1 to S4.

ADVANTAGEOUS EFFECTS

The present disclosure is designed to overflow the reaction solution through the discharge line when the batch-type reactor is filled by the reaction solution during the co-precipitation reaction of the precursor. As a result, it is possible to control the proportion of precursor within the reactor, inducing uniform growth of the precursor and preventing the issue of cracks forming on the surface of the precursor particles. Additionally, by using the overflow method, the amount of reaction solution introduced and discharged can be controlled, allowing for the regulation of the solid density within the reactor. Thus, even within the limited space of the reactor, precursor particles with a uniform particle size distribution and an average particle size $D_{50}$ ranging from 7 $\mu$m to 30 $\mu$m can be manufactured in a short amount of time.

Furthermore, in the present disclosure, the stirring speed at each of the precursor's nucleus growth steps (S2 to S4) is controlled within specific numerical ranges to prevent surface cracks that can occur due to collisions between particles when manufacturing large precursor particles with an average particle size $D_{50}$ of 7 $\mu$m to 30 $\mu$m. As a result, it is possible to prevent cracks on the surface of active material particles during the rolling process in the manufacture of positive electrode active material from the precursor.

According to the precursor manufacturing method of the present disclosure, the formation of microparticles in the reaction solution is minimized during the nucleus growth steps (S2 to S4). Consequently, a positive electrode active material precursor with the desired particle size and a uniform particle size distribution can be produced. Furthermore, there is no need for a separate process to remove microparticles, which significantly reduces the overall process time and cost. Consequently, an improvement can be brought about in the line of balance efficiency, thereby increasing the production volume of the positive electrode active material precursor.

DESCRIPTION OF DRAWINGS

FIG. 1 is a schematic diagram of a method for manufacturing a positive electrode active material precursor according to the present disclosure.

FIG. 2 is an SEM image of the positive electrode active material precursor extracted after 50 hours of co-precipitation reaction and subsequent drying according to Example 1 of the present disclosure.

FIG. 3 is an SEM image of the positive electrode active material precursor extracted after 50 hours of co-precipitation reaction and subsequent drying according to Example 2 of the present disclosure.

FIGS. 4, 5, 6, and 7 are SEM images of the positive electrode active material precursors extracted after 110 hours of co-precipitation reaction according to Comparative Example 1.

MODE FOR INVENTION

Hereinafter, specific details for the practice of the present disclosure will be described in detail with reference to the accompanying drawings. However, in the following description, detailed descriptions of well-known functions or configurations will be omitted when it may make the subject matter of the present disclosure rather unclear.

In the accompanying drawings, the same or corresponding components are given the same reference numerals. In addition, in the following description of the embodiments, duplicate descriptions of the same or corresponding elements may be omitted. However, even if descriptions of components are omitted, it is not intended that such components are not included in any embodiment.

The terms used herein will be briefly described prior to describing the disclosed embodiments in detail. The terms used herein have been selected as general terms which are widely used at present in consideration of the functions of the present disclosure, and this may be altered according to the intent of an operator skilled in the art, conventional practice, or introduction of new technology. In addition, in a specific case, a term is arbitrarily selected by the applicant, and the meaning of the term will be described in detail in a corresponding description of the embodiments. Therefore, the terms used in the present disclosure should be defined based on the meaning of the terms and the overall contents of the present disclosure rather than a simple name of each of the terms.

As used herein, the singular forms "a', "an', and "the" are intended to include the plural forms as well, unless the context clearly indicates the singular forms. Further, the plural forms are intended to include the singular forms as well, unless the context clearly indicates the plural forms.

Further, throughout the description, when a portion is stated as "comprising (including)" a component, it intends to mean that the portion may additionally comprise (or include or have) another component, rather than excluding the same, unless specified to the contrary.

As used herein, the term "and/or" means that either all or only one of the elements of said group may be present. For example, "A and/or B" shall mean "only A, or only B, or both A and B".

Advantages and features of the disclosed embodiments and methods of accomplishing the same will be apparent by referring to embodiments described below in connection with the accompanying drawings. However, the present disclosure is not limited to the embodiments disclosed below, and may be implemented in various different forms, and the present embodiments are merely provided to make the present disclosure complete, and to fully disclose the scope of the invention to those skilled in the art to which the present disclosure pertains.

A method for manufacturing a positive electrode active material precursor using a batch-type reactor, the method comprising the steps of: (S1) forming a nucleus of the precursor; (S2) growing the nucleus formed in the step S1; (S3) further growing the nucleus grown in the step S2; and (S4) further growing the nucleus grown in the step S3, wherein a stirring speed in the batch-type reactor is set to be: 200 rpm to 900 rpm during the step S2, 800 rpm or less during the step S3, and 700 rpm or less during the step S4, and a reaction solution is designed to overflow when the batch-type reactor is full thereof.

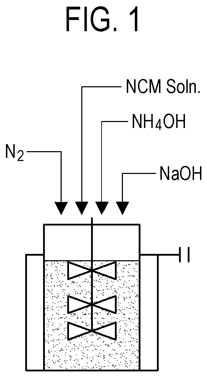

FIG. 1 is an exemplary diagram illustrating the method for manufacturing a positive electrode active material precursor according to the present disclosure. As illustrated in FIG. 1, a batch-type reactor can be used to prepare a reaction slurry containing an anode electrode active material precursor by co-precipitating while introducing a solution containing transition metals, an aqueous alkaline solution, and a solution containing ammonium ions and stirring same.

According to the present disclosure, before introducing the solution containing transition metals, basic aqueous solution, and ammonium ions thereinto, the batch-type reactor is added with deionized water and purged with inactive gas (e.g., nitrogen and/or argon) to remove dissolved oxygen from the water, creating an antioxidative atmosphere inside the reactor. This antioxidative atmosphere may be maintained until the co-precipitation reaction is complete.

Next, the solution containing transition metals, basic aqueous solution, and ammonium ions may be continuously supplied to the batch-type reactor through the inlet provided thereto. These solutions are mixed inside the reactor to form a reaction solution, and the co-precipitation reaction of the reaction solution may result in the formation of particles of the positive electrode active material precursor.

As shown in FIG. 1, a stirrer can be installed in the batch-type reactor. The stirrer might be an impeller, but with no limitations thereto. In the present disclosure, a three-blade impeller, when used as the stirrer, can stir the reaction slurry from the bottom to the top.

Below, each step of the precursor manufacturing method according to the present disclosure is described in more detail.

Nucleation Step (Step 1)

Step S1 is to form a nucleus of the anode active material precursor. Specifically, when a solution containing transition metals, a nitrogen-containing compound, and a basic compound are introduced and stirred within the batch-type reactor, nuclei of the precursor particles in the form of transition metal hydroxides can be formed through co-precipitation. Here, the nuclei of the precursor particles have an average particle size $D_{50}$ ranging from 1.2 $\mu$m to 6.0 $\mu$m and specifically from 1.5 $\mu$m to 5.5 $\mu$m.

In step S1, the stirring speed inside the reactor may range from 250 rpm to 1,000 rpm, preferably from 350 rpm to 900 rpm, and more preferably from 450 rpm to 850 rpm. When the stirring speed in step S1 stage meets these ranges, it effectively induces uniform nucleation.

The pH of the reaction solution during step S1 may be between 10.5 to 13.5, preferably between 10.7 to 13.3, and more preferably between 10.8 to 13.0. When the pH of the reaction solution in step S1 is within these ranges, it allows for controlled initial particle formation. The pH of the reaction solution can be adjusted by regulating the flow rates of the solutions containing transition metals, nitrogen-containing compounds, and/or basic compounds.

The co-precipitation reaction in step S1 may be carried out under an inactive atmosphere such as nitrogen and/or argon at a temperature of 40°C to 60°C. When the temperature is within this range, it is possible to control the rate of the co-precipitation reaction.

During the step S1, the flow rate for introducing the transition metal compound solution into the batch-type reactor may range from 2 mL/min to 35 mL/min, preferably from 3 mL/min to 30 mL/min, and more preferably from 4 mL/min to 25 mL/min. When the flow rate meets these ranges, it allows for control of the solid density within the reactor, which is favorable for the nucleus growth reaction.

The transition metal compound solution may include at least one element selected from a group consisting of nickel, cobalt, and manganese. For example, the transition metal compound solution may include a nickel-cobalt-manganese-based compound.

The transition metal compound solution in an embodiment of the present disclosure may include nickel in an amount of 60 mol% to 96 mol% and preferably 80 mol% to 96 mol%, cobalt in an amount of 0 mol% to 20 mol% and preferably 0 mol% to 10 mol%, and manganese in an amount of 4 mol% to 40 mol% and preferably 4 mol% to 20 mol%. When the content of nickel, cobalt, and manganese in the solution falls within these ranges, the battery can be manufactured, with increased energy density given thereto.

The transition metal compound solution can be prepared by dissolving transition metal-containing raw materials in a solvent such as water. From a productivity perspective, the concentration of the transition metal compound solution might range from 1.80 M to 2.65 M and preferably from 2.00 M to 2.55 M. The amounts of each transition metal-containing raw material added may be determined considering the desired molar ratios of the transition metals in the final positive electrode active material.

Transition metal-containing raw materials might include acetates, carbonates, nitrates, sulfates, halides, sulfides, oxides, hydrates, hydroxides, and/or oxyhydroxides of transition metals, but are not limited thereto. Preferably, the raw materials may include transition metal hydrates, which are advantageous for ease of storage and use.

The transition metal compound solution can be prepared by dissolving raw materials containing nickel, cobalt, and manganese in water. For instance, nickel-containing raw materials may be $Ni(OH)_2$, $NiO$, $NiOOH$, $Ni-CO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, nickel salts of fatty acids, nickel halides, or a combination thereof. Cobalt-containing raw materials may be $CoSO_4$, $Co(OH)_2$, $CoOOH$, $Co(OCOCH_3)_2 \cdot 4H_2O$, $Co(NO_3)_2 \cdot 6H_2O$, $CoSO_4 \cdot 7H_2O$, $Co(SO_4)_2 \cdot 7H_2O$, or a combination thereof. Manganese-containing raw materials may be manganese oxides such as $Mn_2O_3$, $MnO_2$, and $Mn_3O_4$, manganese salts such as $MnCO_3$, $Mn(NO_3)_2$, $MnSO_4$, $MnSO_4 \cdot H_2O$, manganese acetate, manganese dicarboxylates, manganese citrate, and manganese salts of fatty acids, manganese oxyhydroxides, manganese chloride, or a combination thereof. For example, $NiSO_4 \cdot 6H_2O$ may be used as a nickel source, $CoSO_4 \cdot 7H_2O$ as a cobalt source, and $MnSO_4 \cdot H_2O$ as a manganese source.

If the anode active material precursor includes other metal elements (M) besides nickel (Ni), manganese (Mn), and cobalt (Co), raw materials containing these additional metal elements (M) may optionally be added during the preparation of the transition metal compound solution. These metal elements (M) may include one or more elements selected from the group consisting of W, Y, Ba, Ca, Mo, Cr, Al, Zr, Ti, Mg, Ta, and Nb. Furthermore, the raw materials containing metal elements (M) may include acetates, carbonates, nitrates, sulfates, halides, sulfides, hydroxides, oxyhydroxides, and/or oxides of these metal elements (M), but are not limited thereto.

During step S1, the flow rate for introducing the nitrogen-containing compound solution into the batch-type reactor can range from 1.0 mL/min to 10 mL/min, preferably from 1.2 mL/min to 8.0 mL/min, and more preferably from 1.5 mL/min to 5.0 mL/min. When the flow rate meets these ranges, it is possible to maintain an appropriate ammonia concentration in the reaction solution while controlling nucleus formation.

The nitrogen-containing compound solution can act as a complexing agent, assisting in the co-precipitation reaction among the various transition metals within the transition metal compound solution.

The nitrogen-containing compound solution may include an ammonium cation complexing agent. This complexing agent may be at least one compound selected from the group consisting of $NH_4OH$, $(NH_4)_2SO_4$, $NH_4NO_3$, $NH_4Cl$, $CH_3COONH_4$, and $NH_4CO_3$. For example, the nitrogen-containing compound solution may be prepared by dissolving an ammonium cation complexing agent in a solvent. The solvent used can be water or a mixture of water and an organic solvent (such as alcohol). The concentration of the nitrogen-containing compound solution may range from 1% to 50% by weight and preferably from 5% to 25% by weight. In this regard, the ammonia concentration within the reactor can be appropriately controlled.

During step S1, the flow rate for introducing the basic compound solution into the batch-type reactor may range from 2.0 mL/min to 30.0 mL/min, preferably from 2.5 mL/min to 25.0 mL/min, and more preferably from 2.8 mL/min to 20.0 mL/min. When the flow rate falls within these ranges, it enables the maintenance of an appropriate pH level in the reaction solution while inducing consistent nucleus formation.

The basic aqueous solution may include at least one selected from the group consisting of hydrates and hydroxides of alkali metals, and hydrates and hydroxides of alkaline earth metals. For instance, the basic aqueous solution can be prepared by dissolving at least one selected from the group consisting of NaOH, KOH, and $Ca(OH)_2$ in a solvent. The concentration of the basic aqueous solution may range from 5% to 50% by weight and preferably from 10% to 45% by weight. In this case, it is easy to maintain suitable pH values in the reaction solution.

In step S1, the co-precipitation reaction may be carried out for 0.5 hours or longer, preferably for 0.5 hours to 10 hours, and more preferably for 0.5 hours to 8 hours. Thus, step S1 can be concluded once the designated co-precipitation reaction time has elapsed. When the co-precipitation reaction time during step S1 falls within these ranges, it ensures that precursor nuclei of a consistent composition are sufficiently formed, thereby enhancing the yield of the positive electrode active material precursor.

Nucleus Growth Step (Steps S2 to S4)

Steps S2 to S4 are the phase where the nuclei created in step S1 are grown. Specifically in step S2, the nuclei created in step S1 grow. Step S3 is to further grow the nuclei grown in step S2 and in step S4, the nuclei grown in step S3 is allows to further grow.

In steps S2 to S4, the relatively smaller particles among those generated in step 1 disappear while the relatively larger particles increase in average particle size on the basis of the Ostwald ripening. The average particle size $D_{50}$ of the precursor particles can grow by 0.5 $\mu$m to 1.5 $\mu$m every 5 hours at the beginning of steps S2 to S4 and then by 0.1 $\mu$m to 0.3 $\mu$m every 5 hours in the later part of steps S2 to S4. As steps S2 to S4 progress, the particle size distribution of the precursor within the reaction solution becomes more uniform, with the consequent gradual decrease in the Span value of the precursor particles.

In steps S2 to S4, the pH of the reaction solution may range from 10.5 to 13.0, preferably from 10.8 to 12.5, and more preferably from 11.0 to 12.2. When the pH of the reaction solution in steps S2 to S4 is within this range, the nucleus growth reaction predominates over the nucleus creation reaction. The pH of the reaction solution can be adjusted by regulating the flow rates of the transition metal compound solution, the nitrogen-containing compound solution, the basic compound solution, and/or the acidic compound solution. The pH of the reaction solution can be adjusted by regulating the flow rates of the solutions containing transition metals, nitrogen-containing compounds, basic compounds and/or acid compounds.

The concentration of ammonia in the reaction solution during steps S2 to S4 may range from 3,000 ppm to 7,000 ppm, preferably from 3,200 ppm to 6,500 ppm, and more preferably from 3,400 ppm to 6,000 ppm. If the ammonia concentration is below 3,000 ppm, the formation of transition metal hydrates takes priority over the coprecipitation reaction, causing a problem of new fine particles being generated in the reaction solution. If the ammonia concentration exceeds 7,000 ppm, the residual nickel in the reaction solution forms a new complex with ammonia, causing new microparticles to be generated in the reaction solution. The concentration of ammnonia in the reaction solution can be adjusted by the flow rate of the nitrogen-containing compound reaction fed.

During steps S2 to S4, if the ammonia concentration within the reaction solution is maintained between 3,000 ppm and 7,000 ppm, the concentration of residual nickel in the solution may tend to increase as the co-precipitation reaction time progresses. In steps S2 to S4, the concentration of residual nickel in the reaction solution inside the batch-type reactor may be 250 ppm or less, preferably between 0 ppm and 225 ppm, and more preferably between 0 ppm and 200 ppm. Here, the concentration of residual nickel refers to the concentration of nickel in the solution that remains unreacted during the transformation of the transition metal compound solution into the positive electrode active material precursor. When the concentration of residual nickel in the reaction solution is within these ranges, the formation of new microparticles in the reaction solution can be suppressed according to Le Chatelier's principle. The concentration of residual nickel in the reaction solution can be controlled through the flow rate of the transition metal compound solution.

The co-precipitation reaction in steps S2 to S4 may be conducted under an inactive atmosphere such as nitrogen or argon at temperatures of 40°C to 60°C. Maintaining the temperature within this range allows for controlled reaction speeds.

As the co-precipitation reaction proceeds in steps S2 to S4, when the batch-type reactor becomes full of the reaction solution, it is overflowed through the discharge line. As a result, the solid density inside the reactor is controlled to prevents the issue of cracks forming on the particle surfaces. Additionally, the overflow method can adjust the input and discharge amounts of the reaction solution, allowing for control of the solid density inside the reactor. Therefore, even within the limited space of the reactor, it is possible to manufacture large precursor particles with a uniform particle size distribution and an average particle diameter $D_{50}$ ranging from 7 $\mu$m to 30 $\mu$m in a short amount of time.

Below, each sub-step of the nucleus growth step is described in detail.

**(1) Step S2**

Once the average particle size $D_{50}$ of the precursor nuclei produced in step S1 reaches between 1.2 $\mu$m and 6.0 $\mu$m, step S2 may be initiated. Step S2 is characterized by varying the flow rates of the transition metal compound solution, the nitrogen-containing compound solution, and the basic compound solution introduced into the batch-type reactor, as well as the stirring speed and pH, compared to step S1.

During step S2, the stirring speed inside the reactor may be between 200 rpm and 900 rpm, preferably between 225 rpm and 850 rpm, and more preferably between 250 rpm and 800 rpm. If the stirring speed exceeds 900 rpm in step S2, side reactions may dominate over the nucleus growth reaction, resulting in the production of numerous microparticles and causing an uneven particle size distribution of the precursor. If the stirring speed is less than 200 rpm, the aspect ratio of the produced precursor becomes low, reducing the proportion of precursor within the unit volume of the battery, with the consequent decrease of the battery capacity.

The flow rate of the transition metal compound solution introduced into the batch-type reactor during step S2 may range from 5 mL/min to 40 mL/min, preferably from 7 mL/min to 35 mL/min, and more preferably from 10 mL/min to 30 mL/min. When the flow rate meets these ranges, it is possible to appropriately control the growth rate of the formed nuclei.

In step S2, the flow rate of the nitrogen-containing compound solution may be set to be the same as in step S1. For example, the flow rate of the nitrogen-containing compound solution during step S2 may range from 1.0 mL/min to 10.0 mL/min, preferably from 1.2 mL/min to 8.0 mL/min, and more preferably from 1.5 mL/min to 5.0 mL/min.

The flow rate of the basic compound solution in step S2 may be set to be between 3 mL/min and 35 mL/min, preferably between 5 mL/min and 30 mL/min, and more preferably between 8 mL/min and 25 mL/min. A flow rate falling within the ranges allows the pH of the reaction solution to be maintained within an appropriate range.

The co-precipitation reaction in step S2 may be carried out for at least 1 hour, preferably for 1.5 hours to 20 hours, and more preferably for 2 hours to 15 hours. Once the co-precipitation reaction time has elapsed, step S2 may conclude. If the co-precipitation reaction time during step S2 falls within the range, the aspect ratio of the precursor increases, thus increasing the energy density of the battery and regulating the formation of microparticles.

**(2) Step S3**

Once step S2 is completed, step S3 can be initiated. A distinguishing feature of step S3 compared to step S2 is a difference in stirring speed.

The stirring speed inside the reactor in step S3 stage may be slower than in step S2. Specifically, the stirring speed during step S3 may be up to 800 rpm, preferably between 175 rpm and 750 rpm, and more preferably between 200 rpm and 700 rpm. If the stirring speed in step S3 exceeds 800 rpm, the Span value increases.

The flow rate for introducing the transition metal compound solution into the batch-type reactor in step S3 may be the same as in step S2. For example, the flow rate during step S3 may range from 5 mL/min to 40 mL/min, preferably from 7 mL/min to 35 mL/min, and more preferably from 10 mL/min to 30 mL/min.

The flow rate of the nitrogen-containing compound solution in step S3 may be the same as in step S2. For example, the flow rate during step S3 may range from 1.0 mL/min to 10.0 mL/min, preferably from 1.2 mL/min to 8.0 mL/min, and more preferably from 1.5 mL/min to 5.0 mL/min.

The flow rate of the basic compound solution in step S3 may be the same as in step S2. For example, the flow rate during step S3 may range from 3 mL/min to 35 mL/min, preferably from 5 mL/min to 30 mL/min, and more preferably from 8 mL/min to 25 mL/min.

The co-precipitation reaction in step S3 may be conducted for at least 5 hours, preferably between 7 hours and 35 hours. If the co-precipitation reaction time in step S3 falls within these ranges, the average particle size $D_{50}$ of the precursor particles can reach between 6.5 $\mu$m and 13.0 $\mu$m. However, if the average particle size $D_{50}$ of the precursor particles does not reach between 6.5 $\mu$m and 13.0 $\mu$m, the co-precipitation reaction of step S3 under the same conditions may be continued until the average particle size is achieved.

After the completion of step S3, the average particle size $D_{50}$ of the precursor particles may be between 6.5 $\mu$m and 13.0 $\mu$m, preferably between 7.5 $\mu$m and 12.5 $\mu$m, and more preferably between 8.0 $\mu$m and 12.0 $\mu$m. If the average particle size $D_{50}$ of the precursor particles is less than 6.5 $\mu$m after step S3, it can be challenging to manufacture precursor particles with the targeted larger average particle size $D_{50}$. If the average particle size $D_{50}$ of the precursor particles exceeds 13.0 $\mu$m after step S3, the continuation of the co-precipitation reaction by stirring may increase the frequency of particle collisions, potentially causing cracks on the particle surfaces. Therefore, in the present disclosure, once the average particle size $D_{50}$ of the precursor particles reaches between 6.5 $\mu$m and 13.0 $\mu$m, step S3 may be concluded and step S4 initiated.

**(3) Step S4**

Once the average particle size $D_{50}$ of the precursor nuclei created in step S3 reaches between 6.5 $\mu$m and 13.0 $\mu$m, step S3 is concluded and step S4 may commence. Step S4 is characterized by varying the flow rates and stirring speeds for the transition metal compound solution, the nitrogen-containing compound solution, and the basic compound solution in the batch-type reactor compared to step S3.

The stirring speed within the reactor during step S4 may be slower than in steps S2 and S3. Specifically, the stirring speed during step S4 may be up to 700 rpm, preferably between 150 rpm and 650 rpm, and more preferably between 175 rpm and 600 rpm. If the stirring speed during step S4 exceeds 700 rpm, the precursor particles with large average particle sizes $D_{50}$ more frequently collide with each other as the co-precipitation reaction time increases, leading to the formation of cracks on the particle surfaces.

The flow rate for introducing the transition metal compound solution into the batch-type reactor during step S4 may range from 2 mL/min to 30 mL/min, preferably from 3 mL/min to 25 mL/min, and more preferably from 5 mL/min to 20 mL/min. A flow rate meeting the range allows for further growth of the precursor particles with an average particle size $D_{50}$ of 6.5 $\mu$m to 13.0 $\mu$m while suppressing the formation of new microparticles. Since the overflow method is applied during precursor manufacturing, even if the flow rate of the transition metal compound solution in step S4 is reduced compared to steps S2 and S3, the present disclosure can prevent a decrease in the growth rate of the precursor particles.

Considering the flow rate of the transition metal compound solution during step S4, the flow rate of the nitrogen-containing compound solution during step S4 may range from 1.0 mL/min to 10.0 mL/min, preferably from 1.2 mL/min to 8.0 mL/min, and more preferably from 1.5 mL/min to 5.0 mL/min.

Also, considering the flow rate of the transition metal compound solution during step S4, the flow rate of the basic compound solution during step S4 may range from 2 mL/min to 30 mL/min, preferably from 3 mL/min to 25 mL/min, and more preferably from 4 mL/min to 20 mL/min.

For the anode active material precursor produced through steps S1 to S4, the Span value, as defined by the following Equation 1, may be 0.38 or less, preferably 0.35 or less, and more preferably between 0.25 and 0.33:

[Equation 1]

$$\text{Span} = (\text{Particle Diameter } D_{90} - \text{Particle Size } D_{10}) \,/\, \text{Average Particle Size } D_{50}$$

When the Span value of the precursor is within these ranges, it indicates a small deviation in particle size diameter, which helps achieve the desired tap density, specific surface area, and other physical properties of the precursor, and can also improve the charge/discharge capacity of the anode material.

Furthermore, following steps S1 to S4, the method for manufacturing the precursor according to the present disclosure may further include a washing and drying step (step S5).

**Washing and Drying Step (Step S5)**

Step S5 includes washing and drying the anode active material precursor that has been generated through steps S1 to S4. This step is adapted for separating the anode active material precursor from the reaction mixture and subsequently collecting same.

Once the average particle size $D_{50}$ of the precursor developed in step S4 reaches between 7 $\mu$m and 30 $\mu$m, specifically between 8 $\mu$m and 27 $\mu$m, and more specifically between 9 $\mu$m and 25 $\mu$m, the washing process may begin. For this purpose, the reaction solution containing the precursor may be transferred to equipment used in a filter press process. The filter press process involves inputting the reaction mixture under a pressure into a sealed filtration chamber where the solid (cake) and liquid (filtrate) are separated through a filtration medium while carrying out a washing process. Once the washing of the separated precursor particles is completed, the precursor particles were purged with nitrogen gas to prevent the oxidation of the positive electrode active material precursor.

After completion of the washing process for the precursor, the next step is to dry the precursor to remove moisture from the anode active material precursor. The drying process is designed to reduce the moisture content to 1.0% by weight or less and preferably to 0.8% by weight or less, based on the total weight of the precursor. Given the moisture content levels, good productivity and quality can be brought about in subsequent manufacturing processes.

Furthermore, the method for manufacturing a precursor according to the present disclosure may further include a grinding process and/or a classification process as necessary.

Hereinafter, the embodiments of the present disclosure will be described in detail so that the present disclosure can be easily realized by those skilled in the art. However, the present disclosure can be implemented in various different forms and is not limited to the embodiments described herein.

**EXAMPLES AND COMPARATIVE EXAMPLES**

**EXAMPLE 1**

(1) Nucleation Step (Step S1)

Hydrates of $NiSO_4 \cdot 6H_2O$, $CoSO_4 \cdot 7H_2O$, and $MnSO_4 \cdot H_2O$ were mixed at a molar ratio of nickel : cobalt : manganese of 91 : 4.5 : 4.5 in deionized water to prepare a 2.4 M transition metal compound solution.

Into a 30-liter batch-type reactor were introduced 15 liters of deionized water, followed by purging with nitrogen gas at a flow rate of 5 mL/min to remove dissolved oxygen from the water and create a non-oxidative atmosphere inside the reactor. Subsequently, while continuing to purge the reactor with nitrogen gas at a flow rate of 5 mL/min, the transition metal compound solution was fed at a flow rate of 4.51 mL/min, a 25 wt% NaOH solution at a flow rate of 2.84 mL/min, and a 9 wt% $NH_4OH$ solution at a flow rate of 3..00 mL/min.

During this step, adjustment was made to maintain the temperature of the batch-type reactor at 50°C, the pH of the reaction mixture at 11.8, and the stirring speed by the impeller at 750 rpm.

The co-precipitation reaction in the nucleation step (S1) was carried out for 0.5 hours until the average particle size $D_{50}$ of the precursor particle nuclei reached 1.2 $\mu$m to 6.0 $\mu$m.

(2) Nucleus Growth Step (Steps S2 to S4)

Following the completion of step S1, a 1N sulfuric acid solution was introduced into the batch-type reactor so that the pH of the reaction solution was adjusted into 11.2.

After completion of step S1, the flow rate of each component was changed for step S2. Specifically, the 2.4 M transition metal compound solution was introduced at a flow rate of 18.03 mL/min, the 25 wt% NaOH solution at 11.33 mL/min, and the 9 wt% $NH_4OH$ solution at 3.00 mL/min. The stirring speed by the impeller in step S2 was changed to 400 rpm. The co-precipitation reaction in step S2 lasted for 4.5 hours.

After step S2, step S3 commenced with the same flow rates for each component maintained from step S2, but the impeller stirring speed was changed to 300 rpm. The co-precipitation reaction in step S3 continued for 15 hours. If the average particle size $D_{50}$ of the precursor particles did not reach between 6.5 $\mu$m and 13.0 $\mu$m, the co-precipitation reaction was continued under the same conditions until the average particle size was achieved.

After completion of step S3, the flow rate of each component was again changed for step S4. Specifically, the 2.4 M transition metal compound solution was introduced at a flow rate of 9.02 mL/min, the 25wt% NaOH solution at 5.67 mL/min, and the 9wt% $NH_4OH$ solution at 2.10 mL/min. The stirring speed by the impeller in step S4 was changed to 200 rpm. The co-precipitation reaction in step S4 continued for 30 hours.

During steps S2 to S4, if the batch-type reactor became full of the reaction solution, the reaction solution was overflowed through the discharge line.

As steps S2 to S4 had progressed, 100 mL of the reaction solution was extracted every 5 hours, after which ammonia titration was conducted. To maintain the ammonia concentration within the reactor at 4,000 ppm, a $NH_4OH$ solution was further added when the ammonia concentration decreased.

Throughout steps S2 to S4, 50 mL of the reaction solution was extracted every hour, and tested at room temperature (25°C) to ensure that the pH remained stable at 11.2. Once the pH measurements of the extracted reaction solution were completed, the reaction solution was reintroduced into the reactor.

(3) Washing and Drying Step (Step S5)

After the co-precipitation reactions in steps S1 to S4 had progressed for a total of 50 hours, the reaction solution was transferred to a filter press process. In the filter press process, the reaction solution was pumped into a sealed filtration chamber, where the solid (cake) and liquid (filtrate) were separated through a filter medium while conducting the washing procedure. After the washing of the precursor particles was completed, nitrogen, argon, oxygen, or compressed air was supplied at a pressure of 0.4 MPa to dehydrate the supernatant and wash liquids.

Following the filter press and washing processes, the positive electrode active material precursor was dried under conditions of 150°C for 8 hours so that the moisture content within the positive electrode active material precursor was reduced to 0.5 wt% or less.

## EXAMPLE 2

Positive electrode active material precursors were manufactured in the same manner as in step S1, with the exception that the stirring speed by the impeller was adjusted to 650 rpm in step S1.

## COMPARATIVE EXAMPLE 1

Positive electrode active material precursors were manufactured in the same manner as in step S1, with the exception that when the batch-type reactor was full of the reaction solution in steps S2 to S4, the introduction of components and impeller rotation were stopped and the mixture was left for one hour to settle the components, after which the supernatant was discharged in an amount of 10L to 12L to separate the NCM precursor and the supernatant.

In step S1, the co-precipitation reaction was continued for 0.5 hours until the average particle size $D_{50}$ of the precursor particles reached between 1.2 $\mu$m and 6.0 $\mu$m.

The co-precipitation reaction in step S2 lasted for 4.5 hours.

In step S3, the co-precipitation reaction continued for 15 hours until the average particle size $D_{50}$ of the precursor particles reached between 6.5 $\mu$m and 13.0 $\mu$m.

The co-precipitation reaction in step S4 continued for 90 hours until the average particle size $D_{50}$ of the precursor particles reached between 7.0 $\mu$m and 30.0 $\mu$m.

## EXPERIMENTAL EXAMPLE 1: SEM Image Analysis of Precursors

During the steps S2 to S4 in Examples 1-2 and Comparative Example 1, 50 ml of the reaction solution was extracted every 5 hours and dried, followed by SEM (Scanning Electron Microscopy) imaging for precursor particles.

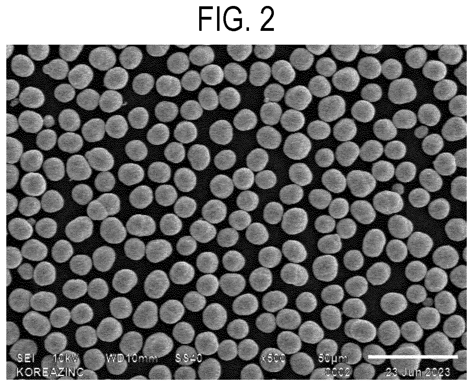

FIG. 2 is an SEM image of the positive electrode active material precursor extracted after 50 hours of co-precipitation reaction and subsequent drying according to Example 1 of the present disclosure.

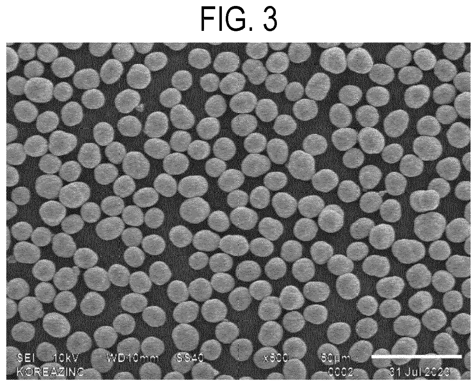

FIG. 3 is an SEM image of the positive electrode active material precursor extracted after 50 hours of co-precipitation reaction and subsequent drying according to Example 2 of the present disclosure

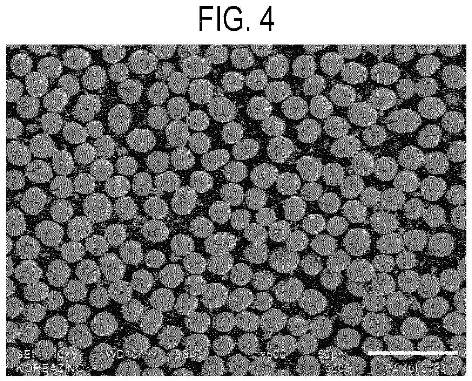

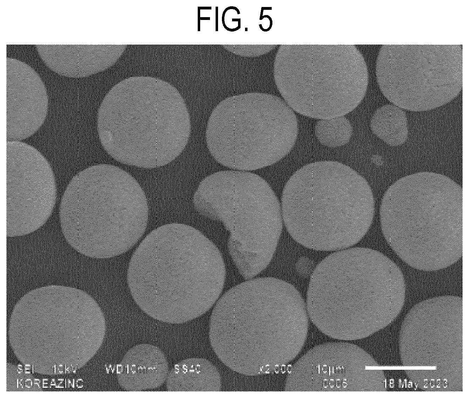

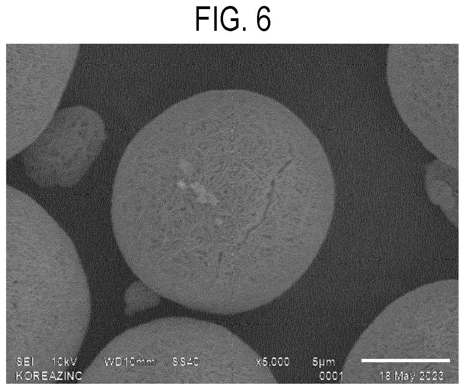

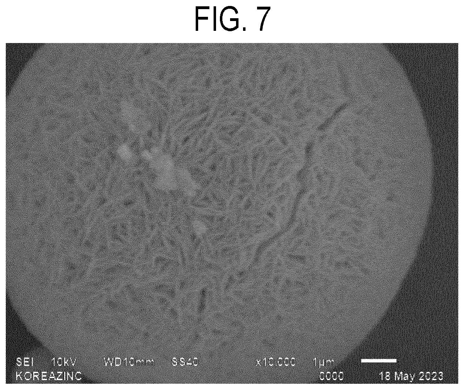

FIGS. 4, 5, 6, and 7 is an SEM image of the positive electrode active material precursor extracted after 110 hours of co-precipitation reaction and subsequent drying according to Comparative Example 1 of the present disclosure.

As shown in FIGS. 2 to 7, in Examples 1 and 2 where the stirring speed was between 200 rpm and 900 rpm during step S2, 800 rpm or less during step S3, and 700 rpm or less during step S4, and where overflow was conducted when the reactor was full, it was observed that the number of microparticles in the SEM images was significantly less compared to Comparative Example 1, which conducted sediment separation when the reactor was full with reaction solution. It was also confirmed that surface cracks did not occur on the precursor particles.

## EXPERIMENTAL EXAMPLE 2: Analysis for Particle Size and Composition of Precursors

During the steps S2 to S4 of Examples 1-2 and Comparative Example 1, 50 ml of reaction solution was extracted every 5 hours, followed by analysis of the precursors' particle size and composition.

Specifically, particle sizes were analyzed using Mastersizer 2000 from Malvern under wet conditions.

Composition Analysis was conducted using Agilent 5900 ICP-OES under inductively coupled plasma conditions.

The analysis results of particle sizes and composition of the extracted reaction solutions from Examples 1-2 and Comparative Example 1 are summarized in Table 1 below.

TABLE 1

| | | Unit | Ex. 1 | Ex. 2 | C. Ex. 1 |
|---|---|---|---|---|---|
| Stirring speed | S1 | rpm | 750 | 650 | 750 |
| | S2 | rpm | 400 | 400 | 400 |
| | S3 | rpm | 300 | 300 | 300 |
| | S4 | rpm | 200 | 200 | 200 |
| Process when full | | - | Overflow | Overflow | Separation by sedimentation |
| Particle size analysis | $D_{50}$ | μm | 13.8 | 13.7 | 13.8 |
| | $D_{10}$ | μm | 11.8 | 11.7 | 11.4 |
| | $D_{90}$ | μm | 15.7 | 16.1 | 16.8 |
| | $D_{min}$ | μm | 7.3 | 7.1 | 5.0 |
| | $D_{max}$ | μm | 19.3 | 19.3 | 22.5 |
| | Span | - | 0.28 | 0.32 | 0.39 |
| Composition | Ni | mol% | 91.0 | 90.9 | 90.9 |
| | Co | mol% | 4.5 | 4.5 | 4.4 |
| | Mn | mol% | 4.5 | 4.6 | 4.7 |
| Co-precipitation reaction time | | hr | 50 | 50 | 110 |

According to Table 1, in Examples 1 and 2 where the stirring speed was between 200 rpm and 900 rpm during step S2, 800 rpm or less during step S3, and 700 rpm or less during step S4, and where overflow was conducted when the reactor was full, it was observed that the Span value was lower and the co-precipitation reaction time was shorter compared to Comparative Example 1, which conducted sediment separation when the reactor was full. This indicates that the particle size distribution of the precursor manufactured in Examples 1 and 2 is more uniform than in Comparative Example 1, and that the co-precipitation reaction time required for manufacturing the precursor in Examples 1 and 2 is significantly reduced compared to Comparative Example 1.

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

**Claims**

1.   A method for manufacturing a positive electrode active material precursor using a batch-type reactor, the method comprising the steps of:

(S1) forming a nucleus of the precursor;
(S2) growing the nucleus formed in the step S1;
(S3) further growing the nucleus grown in the step S2; and
(S4) further growing the nucleus grown in the step S3,
wherein a stirring speed in the batch-type reactor is set to be:

200 rpm to 900 rpm during the step S2,
800 rpm or less during the step S3, and
700 rpm or less during the step S4, and
a reaction solution is designed to overflow when the batch-type reactor is full thereof.

2.   The method of claim 1, wherein a co-precipitation reaction is carried out for 1 to 20 hours in the step S2.

3.   The method of claim 1, wherein the precursor has an average particle size $D_{50}$ of 6.5 μm to 13.0 μm after completion of

the step S3.

4. The method of claim 1, wherein a stirring speed inside the batch-type reactor during the step S1 is between 250 rpm and 1,000 rpm.

5. The method of claim 1, wherein a transition metal compound solution is fed into the batch-type reactor at a flow rate of:

   5 mL/min to 40 mL/min during the steps S2 and S3, and
   2 mL/min to 30 mL/min during the step S4.

6. The method of claim 5, wherein the transition metal compound solution comprises at least one element selected from the group consisting of nickel, cobalt, and manganese.

7. The method of claim 5, wherein the transition metal compound solution comprises:

   nickel in an amount of 60 mol% to 96 mol%;
   cobalt in an amount of 0 mol% to 20 mol%; and
   manganese in an amount of 4 mol% to 40 mol%.

8. The method of claim 1, wherein a nitrogen-containing compound solution is fed at a flow rate of:

   1.0 mL/min to 10.0 mL/min during the steps S2 and S3, and
   1.2 mL/min to 8.0 mL/min during the step S4.

9. The method of claim 1, wherein a basic compound solution is fed at a flow rate of:

   3 mL/min to 35 mL/min during the steps S2 and S3, and
   2 mL/min to 30 mL/min during the step S4.

10. The method of claim 1, wherein the reaction solution within the batch-type reactor has a pH of 10.5 to 13.5 in the step S1.

11. The method of claim 1, wherein the reaction solution within the batch-type reactor has a pH of 10.5 to 13.0 in the steps S2, S3, and S4.

12. The method of claim 1, wherein the reaction solution within the batch-type reactor has an ammonia concentration of 3,000 ppm to 7,000 ppm in the steps S2, S3, and S4.

13. The method of claim 1, wherein the reaction solution within the batch-type reactor has a residual nickel concentration of 250 ppm or less in the steps S2, S3, and S4.

14. The method of claim 1, wherein the positive electrode active material precursor generated through the steps S1 to S4 has a Span value of 0.38 as measured according to the following Equation 1:

[Equation 1]

$$\text{Span} = (\text{Particle size } D_{90} - \text{Particle size } D_{10}) / \text{Average particle size } D_{50}$$

15. The method of claim 1, further comprising a step of (S5) washing and drying the positive electrode active material precursor generated through the steps S1 to S4.

# FIG. 1

# FIG. 2

FIG. 3

## FIG. 4

FIG. 5

FIG. 6

FIG. 7

## INTERNATIONAL SEARCH REPORT

| International application No. |
|---|
| **PCT/KR2024/005165** |

**A.    CLASSIFICATION OF SUBJECT MATTER**

**C01G 53/00**(2006.01)i; **H01M 4/525**(2010.01)i; **H01M 4/505**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

C01G 53/00(2006.01); H01M 10/052(2010.01); H01M 4/131(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 배치(batch), 교반 속도(stirring speed), 성장(growth), 이차전지(secondary battery)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2019-0002179 A (LG CHEM, LTD.) 08 January 2019 (2019-01-08)<br>See paragraphs [0094]-[0099], [0170] and [0178]. | 1-15 |
| Y | CN 115403076 A (GUANGDONG BRUNP RECYCLING TECHNOLOGY CO., LTD. et al.) 29 November 2022 (2022-11-29)<br>See paragraphs [0043] and [0063], and claims 1 and 2. | 1-15 |
| Y | KR 10-1748999 B1 (ENERGY MATERIAL TECHNOLOGY CO., LTD.) 20 June 2017 (2017-06-20)<br>See paragraphs [0089] and [0115]-[0121]. | 12,13 |
| Y | KR 10-2016-0006172 A (SUMITOMO METAL MINING CO., LTD.) 18 January 2016 (2016-01-18)<br>See paragraphs [0061] and [0062]. | 14 |
| A | KR 10-2021-0039962 A (LG CHEM, LTD.) 12 April 2021 (2021-04-12)<br>See paragraphs [0027], [0036] and [0100]-[0102]. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 September 2024** | **20 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/005165** |

| Patent document cited in search report | | | Publication date (day/month/year) | Patent family member(s) | | | Publication date (day/month/year) |
| --- | --- | --- | --- | --- | --- | --- | --- |
| KR | 10-2019-0002179 | A | 08 January 2019 | CN | 110139834 | A | 16 August 2019 |
| | | | | CN | 110139834 | B | 08 March 2022 |
| | | | | JP | 2020-516026 | A | 28 May 2020 |
| | | | | JP | 7009013 | B2 | 25 January 2022 |
| | | | | KR | 10-2123541 | B1 | 16 June 2020 |
| | | | | TW | I678014 | B | 21 November 2019 |
| | | | | TW | 201906220 | A | 01 February 2019 |
| | | | | US | 11183685 | B2 | 23 November 2021 |
| | | | | US | 2019-0355979 | A1 | 21 November 2019 |
| | | | | WO | 2019-004602 | A1 | 03 January 2019 |
| CN | 115403076 | A | 29 November 2022 | FR | 3139242 | A1 | 01 March 2024 |
| | | | | WO | 2024-040908 | A1 | 29 February 2024 |
| KR | 10-1748999 | B1 | 20 June 2017 | | None | | |
| KR | 10-2016-0006172 | A | 18 January 2016 | CN | 105122517 | A | 02 December 2015 |
| | | | | CN | 105122517 | B | 31 October 2017 |
| | | | | EP | 3007254 | A1 | 13 April 2016 |
| | | | | EP | 3007254 | B1 | 19 April 2023 |
| | | | | JP | 2016-154143 | A | 25 August 2016 |
| | | | | JP | 6159395 | B2 | 05 July 2017 |
| | | | | KR | 10-2203425 | B1 | 15 January 2021 |
| | | | | US | 10424787 | B2 | 24 September 2019 |
| | | | | US | 11283072 | B2 | 22 March 2022 |
| | | | | US | 2016-0093885 | A1 | 31 March 2016 |
| | | | | US | 2018-0254481 | A2 | 06 September 2018 |
| | | | | US | 2020-0006770 | A1 | 02 January 2020 |
| | | | | WO | 2014-181891 | A1 | 13 November 2014 |
| KR | 10-2021-0039962 | A | 12 April 2021 | CN | 113784927 | A | 10 December 2021 |
| | | | | EP | 3950600 | A1 | 09 February 2022 |
| | | | | EP | 3950600 | B1 | 17 January 2024 |
| | | | | JP | 2022-530869 | A | 04 July 2022 |
| | | | | JP | 7384540 | B2 | 21 November 2023 |
| | | | | KR | 10-2463235 | B1 | 07 November 2022 |
| | | | | US | 11855287 | B2 | 26 December 2023 |
| | | | | US | 2022-0209232 | A1 | 30 June 2022 |
| | | | | WO | 2021-066576 | A1 | 08 April 2021 |

Form PCT/ISA/210 (patent family annex) (July 2022)